# EUROPEAN PATENT SPECIFICATION

(11) **EP 2 322 678 B1**
(45) Date of publication and mention of the grant of the patent: **19.09.2012**
(21) Application number: 10169197.0
(22) Date of filing: 12.07.2010
(51) Int. Cl.: C22C 37/04, C21D 5/00, C21D 9/28, C21D 9/30

(54) **Heavy austempered ductile iron components**
Schwer ausferritische, duktile Eisenkomponenten
Composants de fer ductile lourd ayant subi une trempe bainitique

(30) Priority: 23.07.2009 US 507885
(43) Date of publication of application: 18.05.2011
(73) Proprietor: General Electric Company, Schenectady, NY 12345 (US)
(72) Inventor: Park, Junyoung, Greer, SC 29650 (US); Bouse, Gregory Keith, Greer, SC 29650 (US); Parolini, Jason Robert, Greer, SC 29650 (US); Sathian, Sujith, Zachary, LA 70791 (US)
(74) Representative: Szary, Anne Catherine

(56) References cited:
- DE-U1- 20 306 253
- US-A1- 2004 112 479
- "Austempered ductile-iron castings - advantages, production, properties and specifications", MATERIALS AND DESIGN, LONDON, GB, vol. 13, no. 5, 1 January 1992 (1992-01-01), pages 285-297, XP024153210, ISSN: 0261-3069, DOI: DOI:10.1016/0261-3069(92)90191-J [retrieved on 1992-01-01]
- PUTATUNDA S K: "Development of austempered ductile cast iron with simultaneous high yield strenght and fracture toughness by a novel two-step austempering process", MATERIALS SCIENCE AND ENGINEERING A: STRUCTURAL MATERIALS:PROPERTIES, MICROSTRUCTURE & PROCESSING, LAUSANNE, CH, vol. A315, 30 September 2001 (2001-09-30), pages 70-80, XP002269143, ISSN: 0921-5093, DOI: DOI:10.1016/S0921-5093(01)01210-2

## Description

### BACKGROUND OF THE INVENTION

The invention relates to drive shafts in wind turbines made of austempered ductile iron.

Wind turbines have a main shaft that transmits power from a rotor to a generator. As wind turbines increase their outputs from 1.5 and 2.5 megawatts (MW) to 3, 4, 5, and 6 MW, the size and required properties of the wind turbine drive shaft increases. In addition, the loads gearbox components, such as planet gear carriers, handle are too high for conventional ductile iron grades (ferrtitic/pearlitic grades). Forged/ hardened steel is the material of choice for gearbox components and drive shafts having sizes greater than 3 tons. This shaft is typically machined out of a steel forging. The material of the shaft is usually quenched-tempered high-strength low alloy steel with critical fatigue properties. Examples include nickel chromium steels such as 34CrNiMo6 steel.

Processing of heavy forged steel wind components from large ingots is complex, requiring numerous hot working operations (a.k.a., forging) and heat treatment operations to sufficiently refine the structure to provide a suitable microstructure responsive to the subsequent quality heat treatment to develop desired mechanical properties. Such exhaustive processing paths and the extensive machining attributed to the limited freedom of geometry come at a steep cost relative to the straightforward production of cast ADI counterparts. In 'Austempered ductile-iron castings-advantages, production, properties and specifications', by Cast Metals Development Ltd., Materials & Design, Vol. 13, No. 5, 1992, ADI parts include crankshafts and automotive parts.

### SUMMARY OF THE INVENTION

Embodiments of the invention include a component drive shaft as given as given in claim 1.

Another embodiment of the invention includes a method as given in claim 4.

Embodiments of the invention are given in the dependent claims.

### DETAILED DESCRIPTION

Austempered ductile iron (ADI) that is cast is able to provide high mass and net-shaped components, greater than about 3 tons, more preferably greater than about 6 tons, for heavy wind turbine shafts and gearbox components. Presently, forge/hardened steel is used to make large wind turbine shafts and gearbox components. However, forged/hardened steel, for example 34CrNiMo6, is a relatively expensive material that requires a complex process to produce a component, especially a component of greater than about 3 tons with complex geometries. As size increases to 6 tons or greater the expense of producing a forged/hardened steel component is even greater and the worldwide supplier base is very limited. The typical steps required to produce heavy wind turbine gearbox components from high strength, low alloy steels include melting of ingot, cogging of ingot into billet, forging of billet, forging of part, normalizing, austenitizing, water quenching, tempering and extensive/complicated machining. The process to produce gearbox components from high strength, low-alloy steel requires numerous steps and a large energy requirement when compared with a conventional casting process. These manufacturing steps for producing components from high strength, low-alloy steel increase in cost as the size of the component increases.

The primary chemical composition of austempered ductile iron (ADI) is given in claim 1. Not every element is identified as there are certain "tramp" elements at low concentrations in the iron. The term ductile iron means that iron makes up the remainder of the composition except for "tramp" elements. ADI provides weight reduction attributed to its lower density, noise reduction attributed to its higher damping capability, similar or better mechanical properties than those of cast/forged steel and the casting processes provide less costly manufacturing and keeps machining of the component to a minimum. ADI requires a special isothermal heat treatment, referred to as austempering, which provides excellent combinations of high strength and toughness. The strain induced by the final machining after this heat treatment enhances the fatigue properties.

Certain properties of ADI are not as good as forged/hardened steel. ADI possesses 15-20 percent less stiffness than forged/hardened steel and lower impact resistance. However, by making the parts slightly larger and/or proper design modifications this deficiency is mitigated. In comparing ADI with forged/hardened steel and the chemistry range identified, it is possible to obtain heavy wind turbine shafts and gearbox components at reduced costs with comparable properties.

The preferred primary chemical composition of ADI for use in embodiments of the present invention is given in claim 1.

Carbide forming elements including but not limited to chromium and vanadium shall be held to as low a level as possible to avoid formation of massive carbides in the microstructure. Chromium and vanadium should be below 0.05 weight percent and 0.02 weight percent respectively.

The matrix microstructure of ADI includes a fine-scale dispersion of acicular ferrite with ductile high carbon stabilized austenite, so called ausferrite. The ausferrite matrix is responsible for unique properties attainable in ADI components.

The austenite in ADI is thermally stabilized with carbon during heat treatment and will not transform to brittle martensite even at temperatures approaching absolute zero. Stable, carbon enriched austenite can undergo a strain-induced transformation when exposed to high, normal forces. This transformation, which gives ADI its remarkable wear resistance, is more than mere "work hardening". In addition to a significant increase in flow stress and hardness, this strain induced transformation of the austenite to martensite also produces a localized increase in volume and creates high compressive stresses in the "transformed" areas. These compressive stresses inhibit crack formation and growth, and produce significant improvements in the fatigue properties of ADI when it is machined after heat treatment or subjected to surface treatments such as shot peening, grinding or rolling.

Austenitizing is the process of holding the ductile iron casting above the critical temperature for a sufficient period of time to ensure that the matrix is fully transformed to austenite. Both austenitizing time and temperature depend on the microstructure and composition of the as-cast material. In order to produce a single phase matrix microstructure (austenite) with a uniform carbon distribution, austenitizing includes holding the casting at temperatures in the range of about 815-985°C (1500-1800°F) for a time period that is sufficient to fully convert the matrix of the thickest section to austenite. Unlike steels, selection for the austenitizing temperature in cast irons determines the initial carbon content of the austenite, a factor crucial in defining the thermodynamic driving force for ausferrite transformation during subsequent austempering. Additionally, proper selection of the austenitizing temperature will help ensure distribution of austenite and ferrite phases within the fully transformed ausferrite product.

An isothermal hold is preformed right after a direct quench from austenitizing to a temperature above the martensitic transformation. The rate of quench has to be high enough to avoid ferrite/pearlite formation. Depending upon the desired mechanical properties of end products, the temperature of the isothermal hold (a.k.a. austempering) is in the range of about 230 to about 400 °C (450-750 °F) and its duration has to be long enough to produce a matrix of ausferrite which includes acicular ferrite and austenite stabilized with about 2 weight percent carbon. Selection of the austempering temperature also plays a crucial role in defining the nature and composition of the ausferrite product and its attendant properties. In general, as the austempering temperature decreases, the carbon stabilized austenite will increase in carbon content and decrease in volume fraction, which is compensated by an increase in volume fraction of ferrite. Ductile iron austempered at lower temperatures will typically have a finer matrix microstructure with improved strength compared to iron transformed at higher temperatures. However, these irons will typically contain higher levels of carbide at the expense of ferrite potentially leading to a drop in toughness. Careful selection of austempering temperature with sufficient hold time is required to develop the desired properties of ADI components.

Generally, cast ADI parts provide components that are net-shaped and require no further machining; however, for some parts, depending on their geometry machining may be necessary. Gun drilling or deep hole drilling that is needed to create a center bore in forged wind turbine shafts can be eliminated with the use of cores in the casting process described above.

While various embodiments are described herein, it will be appreciated from the specification that various combinations of elements, variations or improvements therein may be made by those skilled in the art, and are within the scope of the invention. In addition, many modifications may be made to adapt a particular situation or material to the teachings of the invention without departing from the scope given in the claims. Therefore, it is intended that the invention not be limited to the particular embodiment disclosed as the best mode contemplated for carrying out this invention, but that the invention will include all embodiments falling within the scope of the appended claims.

## Claims

1. A wind turbine drive shaft comprising:
cast austempered ductile iron containing 3.0 to 3.8 weight percent carbon, 1.9 to 2.8 weight percent silicon, up to 0.3 weight percent manganese, up to 0.8 weight percent copper, up to 2.0 weight percent nickel, up to 0.3 weight percent molybdenum, 0.03 to 0.06 weight percent magnesium, less than 0.05 weight percent chromium, less than 0.02 weight percent vanadium, and less than 0.01 weight percent sulfur, balance iron and incidental impurities wherein the drive shaft comprises a mass of more than about 3 tons.

2. The wind turbine drive shaft of claim 1, wherein the drive shaft comprises a mass of more than about 6 tons.

3. The wind turbine drive shaft of claim 1 or claim 2, wherein the austempered ductile iron comprises acicular ferrite and austenite.

4. A method of manufacturing a wind turbine drive shaft, the method comprising:
melting ductile iron containing 3.0 to 3.8 weight percent carbon, 1.9 to 2.8 weight percent silicon, up to 0.3 weight percent manganese, up to 0.8 weight percent copper, up to 2.0 weight percent nickel, up to 0.3 weight percent molybdenum, 0.03 to 0.06 weight percent magnesium, less than 0.05 weight percent chromium, less than 0.02 weight percent vanadium, and less than 0.01 weight percent sulfur, balance iron and incidental impurities;
casting the component;
austenitizing the component;
quenching the component; and
austempering the component;
wherein the component comprises a mass of more than about 3 tons.

5. The method of claim 4, wherein the quenching comprises immersing the component in a medium kept at a temperature of from 230 to 400 °C.

6. The method of claim 4 or claim 5, further comprising:
machining the component.

7. The method of any one of claims 4 to 6, wherein the component comprises a mass of more than about 6 tons.

8. The method of any one of claims 4 to 7, wherein the austenitizing comprises holding the component at a temperature in a range of 815 °C to 985 °C for a time sufficient to convert a matrix to austenite

## Patentansprüche

1. Windkraftanlagen-Antriebswelle, aufweisend:
ausferritisches duktiles Gusseisen, das 3,0 bis 3,8 Gewichtsprozent Kohlenstoff, 1,9 bis 2,8 Gewichtsprozent Silizium, bis zu 0,3 Gewichtsprozent Mangan, bis zu 0,8 Gewichtsprozent Kupfer, bis zu 2,0 Gewichtsprozent Nickel, bis zu 0,3 Gewichtsprozent Molybdän, 0,03 bis 0,06 Gewichtsprozent Magnesium, weniger als 0,05 Gewichtsprozent Chrom, weniger als 0,02 Gewichtsprozent Vanadium und weniger als 0,01 Gewichtsprozent Schwefel und den Rest Eisen und zufällige Verunreinigungen enthält, wobei die Antriebswelle eine Masse von mehr als ca. 3 Tonnen aufweist.

2. Windkraftanlagen-Antriebswelle nach Anspruch 1, wobei die Antriebswelle eine Masse von mehr als ca. 6 Tonnen aufweist.

3. Windkraftanlagen-Antriebswelle nach Anspruch 1 oder Anspruch 2, wobei das ausferritische duktile Gusseisen nadelförmiges Ferrit und Austenit aufweist.

4. Verfahren zum Herstellen einer Windkraftanlagen-Antriebswelle, wobei das Verfahren die Schritte aufweist:
Schmelzen von duktilem Eisen, das 3,0 bis 3,8 Gewichtsprozent Kohlenstoff, 1,9 bis 2,8 Gewichtsprozent Silizium, bis zu 0,3 Gewichtsprozent Mangan, bis zu 0,8 Gewichtsprozent Kupfer, bis zu 2,0 Gewichtsprozent Nickel, bis zu 0,3 Gewichtsprozent Molybdän, 0,03 bis 0,06 Gewichtsprozent Magnesium, weniger als 0,05 Gewichtsprozent Chrom, weniger als 0,02 Gewichtsprozent Vanadium und weniger als 0,01 Gewichtsprozent Schwefel und den Rest Eisen und zufällige Verunreinigungen enthält;
Gießen der Komponente;
Austenitisierung der Komponente;
Abschrecken der Komponente; und
Ausferritisieren (Vergüten) der Komponente;
wobei die Komponente eine Masse von mehr als ca. 3 Tonnen aufweist.

5. Verfahren nach Anspruch 4, wobei die Abschreckung den Schritt des Eintauchens der Komponente in ein auf einer Temperatur von 230 bis 400 °C gehaltenes Medium umfasst.

6. Verfahren nach Anspruch 4 oder Anspruch 5, ferner mit dem Schritt:
mechanisches Bearbeiten der Komponente.

7. Verfahren nach einem der Ansprüche 4 bis 6, wobei die Komponente eine Masse von mehr als ca. 6 Tonnen aufweist.

8. Verfahren nach einem der Ansprüche 4 bis 7, wobei die Austenitisierung den Schritt des Haltens der Komponente bei einer Temperatur in einem Bereich von 850 °C bis 985 °C für eine ausreichende Zeit zur Umwandlung einer Matrix in Austenit aufweist.

## Revendications

1. Arbre de commande pour éolienne, qui est une pièce coulée en une fonte bainitique contenant de 3,0 à 3,8 % en poids de carbone, de 1,9 à 2,8 % en poids de silicium, jusqu'à 0,3 % en poids de manganèse, jusqu'à 0,8 % en poids de cuivre, jusqu'à 2,0 % en poids de nickel, jusqu'à 0,3 % en poids de molybdène, de 0,03 à 0,06 % en poids de magnésium, moins de 0,05 % en poids de chrome, moins de 0,02 % en poids de vanadium, et moins de 0,01 % en poids de soufre, le complément étant constitué par du fer et des impuretés accidentelles, lequel arbre de commande a une masse de plus d'environ 3 tonnes.

2. Arbre de commande pour éolienne, conforme à la revendication 1, lequel arbre de commande a une masse de plus d'environ 6 tonnes.

3. Arbre de commande pour éolienne, conforme à la revendication 1 ou 2, dans lequel la fonte bainitique comprend de la ferrite aciculaire et de l'austénite.

4. Procédé de fabrication d'un arbre de commande pour éolienne, lequel procédé comporte les étapes suivantes :
- faire fondre une fonte ductile contenant de 3,0 à 3,8 % en poids de carbone, de 1,9 à 2,8 % en poids de silicium, jusqu'à 0,3 % en poids de manganèse, jusqu'à 0,8 % en poids de cuivre, jusqu'à 2,0 % en poids de nickel, jusqu'à 0,3 % en poids de molybdène, de 0,03 à 0,06 % en poids de magnésium, moins de 0,05 % en poids de chrome, moins de 0,02 % en poids de vanadium, et moins de 0,01 % en poids de soufre, le complément étant constitué par du fer et des impuretés accidentelles,
- couler la pièce,
- austénitiser la pièce,
- tremper la pièce,
- et soumettre la pièce à une trempe étagée,
la pièce ayant une masse de plus d'environ 3 tonnes.

5. Procédé conforme à la revendication 4, dans lequel l'étape de trempe comporte le fait de plonger la pièce dans un milieu maintenu à une température de 230 à 400 °C.

6. Procédé conforme à la revendication 4 ou 5, qui comporte en outre le fait d'usiner la pièce.

7. Procédé conforme à l'une des revendications 4 à 6, dans lequel la pièce a une masse de plus d'environ 6 tonnes.

8. Procédé conforme à l'une des revendications 4 à 7, dans lequel l'étape d'austénitisation comporte le fait de maintenir la pièce à une température située dans l'intervalle allant de 815 °C à 985 °C pendant un laps de temps suffisant pour que la matrice soit transformée en austénite.
